# EUROPEAN PATENT SPECIFICATION

(11) **EP 3 753 759 B1**
(45) Date of publication and mention of the grant of the patent: **30.03.2022**
(21) Application number: 20180340.0
(22) Date of filing: 16.06.2020
(51) Int. Cl.: B60D 5/00, B61D 17/22, B62D 47/02

(54) **CONNECTING AND CLOSING DEVICE FOR ARTICULATED VEHICLE, CORRESPONDING ARTICULATED VEHICLE AND METHOD**
VERBINDUNGS- UND SCHLIESSVORRICHTUNG FÜR EIN GELENKFAHRZEUG, ENTSPRECHENDES GELENKFAHRZEUG UND VERFAHREN
DISPOSITIF DE CONNEXION ET DE FERMETURE POUR VÉHICULE ARTICULÉ, VÉHICULE ARTICULÉ ET PROCÉDÉ CORRESPONDANTS

(30) Priority: 21.06.2019 IT 201900009846
(43) Date of publication of application: 23.12.2020
(73) Proprietor: P.E.I. Protezioni Elaborazioni Industriali S.r.l., 40012 Calderara di Reno (Bologna) (IT)
(72) Inventor: BENEDETTI, Michele, 40132 Bologna (IT); GUIDI, Luca, 40131 BOLOGNA (IT)
(74) Representative: Milli, Simone

(56) References cited:
- EP-A2- 0 067 944
- DE-A1- 4 104 239
- DE-A1- 19 802 123
- DE-A1-102017 121 325
- DE-C- 939 817

## Description

This invention relates to a device for connecting and closing articulated road vehicles, for example articulated buses, trams, or vehicles designed to circulate on rails. Such a device is known from document EP 0 067 944 A2.

With reference, as a non-limiting example, to an articulated bus, it is known that between the two carriages of the bus there is a rotatable platform (known as "rack'), the purpose of which is also that of allowing both the passage and the standing of passengers in the connecting zone between the carriages. The connecting zone must inevitably guarantee safe conditions even when the bus goes round a bend, that is to say, even when the two carriages are not aligned with each other allowing a tunnel-like free passage.

For that purpose, the connecting zone is closed inside a connecting and closing device shaped to define a tunnel for passage between the two carriages, to which it is connected.

More specifically, the ends of the connection device are connected to the free ends of the two carriages, in such a way that the device deforms when the bus adopts configurations wherein the two carriages are not are aligned with each other.

The conventional connection devices comprise a supporting structure which increases the weight of the connection device, and this results in, in use, an additional energy consumption of the vehicle as well as a reduction of the useful life of the shock absorbing system of the vehicle. One aim of this invention, therefore, is to provide a connecting and closing device for carriages of articulated vehicles, in particular articulated buses, which is lightweight and ensures the necessary functionality.

A further aim of this invention is to provide a connection device which is particularly simple, practical and flexible, so as to be able to adapt to the various needs during use of the vehicle, for example along a bend in the case of relative movements, even significant, between the two units.

The technical characteristics of the invention, with reference to the above aims, are clearly described in the claims below and its advantages are apparent from the detailed description which follows, with reference to the accompanying drawings which illustrate a preferred embodiments of the invention provided merely by way of example without restricting the scope of the inventive concept, and in which:
- Figure 1 shows an articulated vehicle, in particular a bus, equipped with a connecting and closing device in accordance with the invention;
- Figures 2A and 2B are a front view and a top view of a connection device according to the invention,
- Figures 3A and 3B are a front view and a top view of a connection device according to the invention,
- Figures 4 to 7 illustrate aspects of connection devices according to one or more embodiments of the invention, and
- Figure 8 shows a system for connecting and closing and thermal treatment according to the invention.

In this invention, reference will be made for simplicity to a device designed for installation between carriages of an articulated bus, however this solution may be applied to any type of articulated vehicle.

In effect, the invention can be applied, for example, to articulated buses, trams or vehicles designed to circulate on rails.

All the embodiments described with reference to a connection of articulated bus carriages are provided purely by way of non-limiting example.

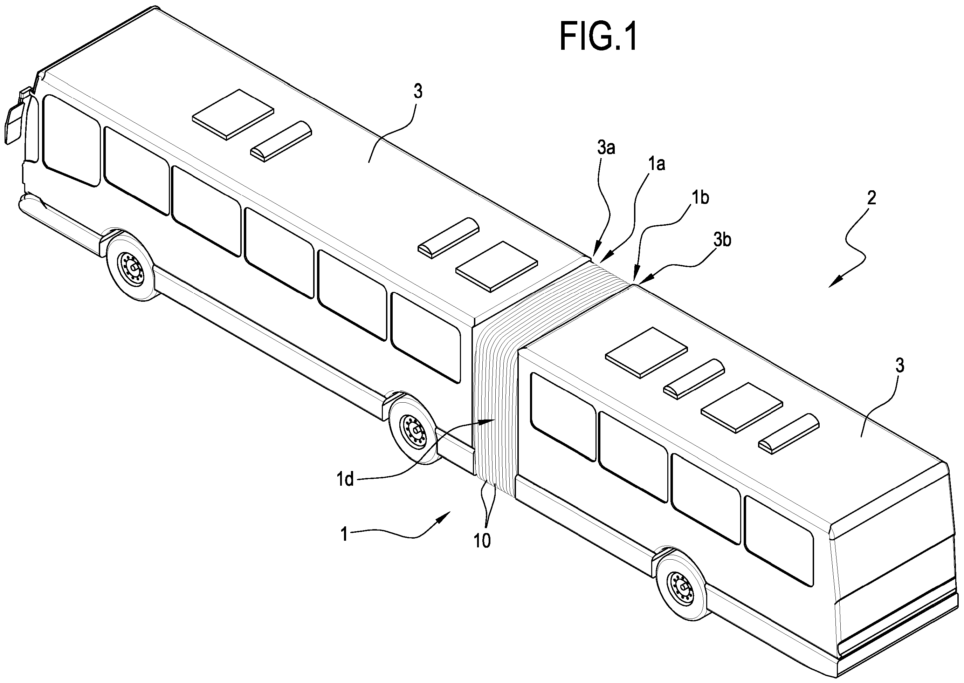

Figure 1 illustrates a connection device 1 according to one or more embodiments mounted on an articulated bus 2 comprising two units 3. The connection device 1 may be mounted on the bus 2 for joining together the rooms of the two adjacent units (or carriages) 3. The articulated bus 2 also comprises a connecting and articulated joint interposed between the units to allow the relative movement, such that the connection device 1 is able to close the space between the two units 3 at the connecting joint.

The connection device 1 is located at an articulated joint (not illustrated in Figure 1) for connecting between the two carriages 3 which allows the relative movement. The passage of the passengers is generally allowed at the articulated jointing the connecting zone between the carriages or unit 3.

The connection device 1 comprises a plurality of inflatable tubular elements 10 made of flexible material, for example PVC, polyvinyl chloride and, more generally, elastomers. The flexible materials may comprise materials used for making tyres, for example rubber mixes, if necessary with structural stabilising elements. The tubular elements 10 are located alongside one another, for example each tubular element 10 may be joined to the one or more immediately adjacent tubular elements 10. The plurality of tubular elements 10 forms a tunnel-like structure for passage and connection between the two carriages 3.

In particular, a first and a second end 1a and 1b of the tunnel structure are coupled directly or indirectly, preferably constrained, to two respective free ends 3a and 3b of the two carriages 3, in such a way that the connection device 1 deforms when the bus 2 adopts configurations wherein the two carriages 3 are not aligned with each other, as occurs, for example, along bends during normal travel. The tunnel structure of the connection device 1 has an upper wall 1c and a first and second side wall 1d and 1e, with the upper wall 1c and side walls 1d, 1e interposed between the first and second ends 1a and 1b of the connection device 1.

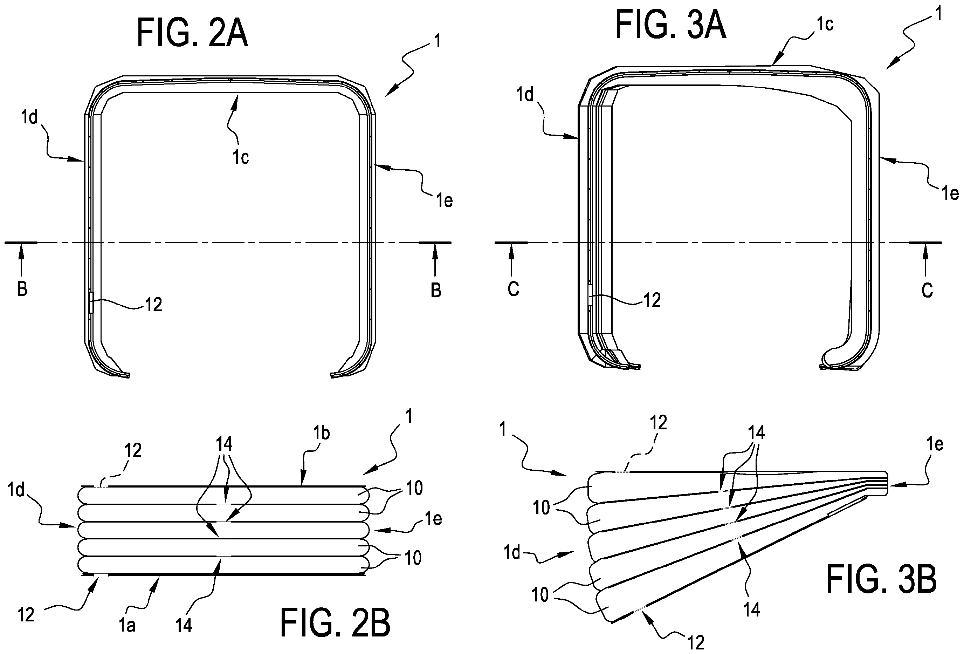

According to one or more embodiments, Figure 2A shows a front view of the connection device 1 and Figure 2B shows a top view of the connection device 1 along the section B-B shown in Figure 2A.

One or more of the tubular elements 10 may comprise one or more openings 12 configured for introducing fluid, preferably a gas, even more preferably air, inside the one or more tubular elements 10. For example, the tubular element 10 at one of the two ends 1a, 1b of the structure formed by the plurality of tubular elements 10 may comprise the at least one opening 12. As illustrated in Figures 2A, 2B, both of the tubular elements 10 at the opposite ends of the tunnel structure, that is to say, the tubular elements 10 at the ends 1a, 1b of the connection device 1, may comprise a respective opening 12. For example, the one or more openings 12 may be on frames of the connection device 1 at the ends 1a, 1b.

According to the invention by means of the one or more openings 12, the tubular elements 10 can be inflated and, once inflated, the tunnel structure is self-supporting. In other words, once inflated, the structure formed by the plurality of tubular elements 10 is able to connect the units 3 of the articulated bus even when these units are misaligned and at the same time it is able to support itself, that is to say, without using supporting structures.

According to one or more embodiments, there may be further openings or passages 14 at each point of contact between pairs of adjacent tubular elements 10, with the passages 14 configured to allow the passage of fluid between the tubular elements 10 in the pair. In this way, even if only one or both of the tubular elements 10 at the ends 1a, 1b comprise the opening 12, the tubular elements 10 which do not comprise an opening 12 can also be inflated.

Each passage 14 may be formed at any point of a contact area between one tubular element 10 and the adjacent one in the pair of tubular elements 10. For each pair of adjacent tubular elements 10, the contact area may comprise one or more passages 14.

For example, but without limiting the scope of the invention, as illustrated in Figure 2B, the passages 14 may be located on the contact area at the upper wall 1c of the connection element 1. Again for example, the passages 14 may be located, for each pair of adjacent tubular elements 10, at a same point along the length of the tubular elements 10. According to one or more embodiments, Figure 3A shows a front view of the connection device 1 when the units 3 coupled to the device 1 are misaligned, and Figure 3B shows a top view of the connection device 1 along the section C-C shown in Figure 3A. The tubular elements 10 of the connection device 1 are configured to be compressed, in particular at one or both of the side walls 1d, 1e, when the two units 3 of the articulated bus 2 are misaligned, for example on a bend.

As may be seen in Figure 3B, relative to the situation wherein two units 3 of the articulated bus 2 are misaligned, for example along a bend, when portions of the tubular elements 10 at the second side wall 1e are compressed, portions of the tubular elements 10 at the first side wall 1d are stretched, as a result of an increased pressure inside the tubular elements 10. In this way, when one or more tubular elements 10 are compressed, the fluid contained inside them, subjected to a greater pressure, may be divided along a length of the tubular elements 10. According to one or more embodiments, the passages 14 may be positioned alternately at the opposite ends of a length of the tubular elements 10 for pairs of adjacent tubular elements 10. Advantageously, in this way almost the integrity of a tubular element 10 can be inflated before the fluid starts to flow in the next tubular element 10.

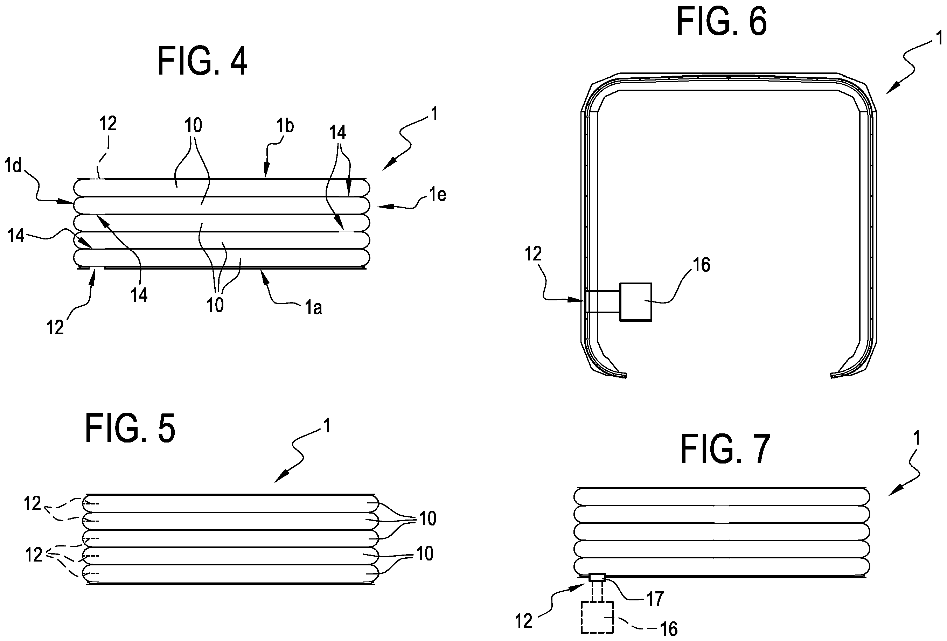

Figure 4 shows a top view of the connection device 1 according to one or more embodiments, wherein the same references used for the previous drawings indicate the same elements having the same technical/functional features. In Figure 4, the passages 14 may be located at opposite ends of the upper wall 1c.

Figure 5 shows a top view of the connection device 1 according to one or more embodiments, wherein the same references used for the previous drawings indicate the same elements having the same technical/functional features. In Figure 5, each of the tubular elements 10 may be isolated from the other tubular elements 10 (that is, it does not comprise any passage 14) and may comprise a respective opening 12. In other words, each of the tubular elements 10 may be independently inflated and be watertight relative to the adjacent tubular elements 10. Advantageously, in this way, if a twist is formed in a tubular element 10 in the structure, the fluid escapes only from the broken tubular element 10, without resulting in the total deflation of the structure.

The openings 12 may be located in a lower portion of the tubular elements 10, for example in a portion in contact with the connecting and articulated joint of the bus 2.

As illustrated in Figure 6, the one or more openings 12 of the connection device 1, as described with reference to any one of the preceding drawings, may be coupled directly or indirectly to a source of fluid 16 which generates pressurised fluid, for example a fan and/or a compressor, configured for introducing fluid inside the plurality of tubular elements 10. The pressure inside the tubular elements (differential relative to that of the outside environment) may be between 0.01 MPa and 0.2 MPa, preferably between 0.02 MPa and 0.15 MPa, more preferably between 0.04 MPa and 0.1 MPa. The operating pressure may be defined as a function of the source of fluid 16 selected.

As illustrated in Figure 7, the opening 12 of a connection device 1 as described with reference to any one of the preceding drawings is coupled to the source of fluid 16 by means of a valve 17, configured to allow the transfer of fluid from or to the plurality of tubular elements 10 when open. In other words, the valve 17 may be open for introducing and/or extracting fluid, whilst it may remain closed otherwise.

According to one or more embodiments, the valve 17 may be coupled to the source of fluid 16 and open during the inflation of the tubular elements 10 and may be uncoupled and closed once the tubular elements 10 are inflated, so that the structure formed by the plurality of tubular elements 10 becomes sealed (when the tubular elements 10 are not inflated). According to one or more embodiments, the open valve 17 may be coupled, directly or indirectly, to the source of fluid 16 during inflation of the tubular elements 10.

According to another aspect, the valve 17 may be coupled to an inflatable relief element, for example a balloon.

In this way, the coupling between the valve 17 and the inflatable relief element allows the tunnel-like structure of the sealed connection device 1 to be maintained when the tubular elements 10 are not inflated. When one or more portions of the tubular elements 10 are compressed, the fluid may escape from the tubular elements 10, for example through the opening 12. For this reason, the relief element (initially deflated) may receive fluid when necessary, for example when the tubular elements 10 are compressed and the pressure of the fluid inside them increases. According to one or more embodiments, the source of pressurised fluid 16 may, in use, remain coupled, directly or indirectly, for example by means of the valve 17, to the one or more openings 12. The source of fluid 16 may be configured to adjust a flow of fluid as a function of a pressure inside the plurality of tubular elements 10, so as to maintain a predetermined pressure, for example a constant pressure, inside the self-supporting structure comprising the plurality of tubular elements 10. When one or more portions of the tubular elements 10 are compressed, the fluid may escape from the tubular elements 10, for example through the opening 12. In this case, the source of fluid 16 may be configured for extracting and/or introducing fluid, for example air, from or in the opening 12, with a quantity such as to maintain a predetermined pressure, for example constant, inside the tubular elements 10, so as to compensate for the compression of the tubular elements 10 following relative movements of the units 3.

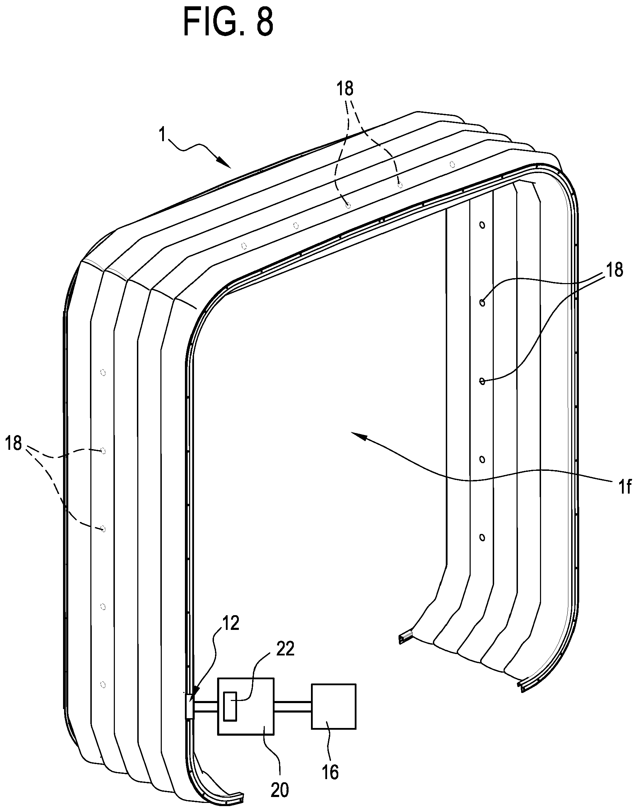

According to one or more embodiments, when the source of fluid 16 remains coupled, in use, to the one or more openings 12, one or more or all of the tubular elements 10 may comprise a plurality of micro-holes 18. As illustrated in Figure 8, the micro-holes 18 may be positioned at the side walls 1d, 1e and/or at the upper wall 1c, towards the inside of the articulated bus 2, that is, towards an inner portion 1f of the tunnel structure of the connection device 1. The plurality of micro-holes 18 may be configured for transferring the fluid from the one or more or all the tubular elements 10 towards the inner portion 1f of the tunnel structure of the connection device 1. The micro-holes 18 may be between 0.1 mm and 5 mm, preferably between 0.2 mm and 2.5 mm, more preferably between 0.4 mm and 1.5 mm, even more preferably between 0.8 mm and 1.2 mm. In this case, the source of fluid 16 may be configured to keep a predetermined pressure compensating both the compression of the tubular elements 10 following relative movements of the units 3 and the escape of fluid through the micro-holes 18. The operating pressure may be defined as a function of the source of fluid 16 selected and of the size of the micro-holes 18. Advantageously, the presence of micro-holes 18 makes it possible to extract fluid from the tubular elements 10 and insert it inside the articulated bus 2.

According to one or more embodiments, the source of fluid 16 may be configured for sucking air from the inside of one or both the units 3 of the articulated bus 2, and introducing the sucked air inside the tubular elements 10. Advantageously, in this way the air which passes through the micro-holes 18 is approximately at the same temperature as the air inside the units 3 of the articulated bus 2.

As illustrated in Figure 8, one or more embodiments may relate to a system 4 for connecting and closing mountable on an articulated bus and treatment of the air between the two units 3 of an articulated vehicle 2. The connecting and closing system 4 comprises a connection device 1 as described with reference to Figure 8, that is to say, comprising a plurality of micro-holes 18 in one, more or all the tubular elements 10 towards the inner portion 1f of the tunnel structure formed by the plurality of tubular elements 10.

The connecting and closing system 4 comprises a thermal treatment system 20, coupled directly or indirectly to the one or more openings 12 and configured for thermally treating the fluid comprising air inserted inside the plurality of tubular elements 10, for example for heating or cooling the air in the plurality of tubular elements 10.

As illustrated in Figure 8, the thermal treatment plant 4 may be coupled to the opening 12 on a same line with respect to the source of fluid 16. For example, the thermal treatment plant 20 is illustrated downstream of the source of pressurised fluid 16, however it is possible to locate it upstream, or on a line for connection to the opening 12 alternative to that of the source of pressurised fluid 16.

The thermal treatment plant 20 may comprise a heat exchanger 22, configured for cooling and/or heating the fluid, for example the air inside the plurality of tubular elements 10. In this way, the air which escapes from the plurality of micro-holes 18 towards the inside of the connecting portion 1f between the two units 3 of the articulated bus 2 can be conditioned. Advantageously, the presence of micro-holes 18 may allow hot or cold air to be introduced, depending on the season, in the connecting portion between the units 3 of the bus 2, which conventionally is colder or hotter than the rest of the bus 2.

According to one or more embodiments, the heat exchanger 20 may be located close to the engine (not illustrated) of the bus 2 and may be configured to use the heat generated by the engine of the bus 2 for heating the fluid inside the plurality of tubular elements 10.

One or more embodiments relate to a method for operating a device 1 for connecting and closing the space between two units 3 of an articulated vehicle 2. The method comprises:
- preparing a connection device 1 according to one or more embodiments,
- preparing a source 16 which generates pressurised fluid,
- inflating the plurality of tubular elements 10 of the connection device 1 using the one or more openings 12.

The method can comprise the step of adjusting a flow of fluid as a function of a pressure inside the plurality of tubular elements 10, so as to maintain a predetermined pressure, for example constant, inside the plurality of tubular elements 10.

The method can comprise the steps of:
- preparing a plurality of micro-holes 18 in one, more or all the tubular elements 10, positioned towards an inner portion 1f of the tunnel structure of the connection device 1, and
- transferring the fluid from the tubular elements 10 comprising the micro-holes 18 towards the inner portion 1f of the tunnel structure of
the connection device 1 using the micro-holes 18.

The method may comprise the step of maintaining the tunnel structure of the connection device 1 in a sealed fashion, when the tubular elements 10 are not inflated.

## Claims

1. A connection device (1) for connecting and closing the space between two units (3) of an articulated vehicle (2), comprising:
- a plurality of inflatable tubular elements (10) which are made of flexible material, the tubular elements (10) in the plurality of tubular elements (10) positioned one alongside the other and forming a tunnel structure having an upper wall (1c) and two side walls (1d, 1e), the structure having two ends (1a, 1b) which can be coupled to respective ends (3a, 3b) of said two units (3) of the articulated vehicle (2),
- at least one opening (12) for introducing fluid inside at least one tubular element (10) in the plurality of tubular elements (10),
wherein the structure formed by the plurality of tubular elements (10), when inflated, is self-supporting, wherein the tunnel structure is configured to be closed in a watertight fashion and further comprising a valve (17) that may be open for introducing and/or extracting fluid, whilst it may remain closed otherwise.

2. The connection device according to claim 1, wherein at least one tubular element (10) at one of said two ends (1a, 1b) of the structure formed by the plurality of tubular elements (10) comprises the at least one opening (12).

3. The connection device according to claim 1 or 2, wherein the tubular elements (10) are configured to be compressed, preferably at one or both of the two side walls (1d, 1e).

4. The connection device according to any one of the preceding claims, wherein, at each point of contact between pairs of adjacent tubular properties (10), there is at least one further opening (14) to allow the passage of fluid between the tubular elements (10) in the pair.

5. The connection device according to any one of claims 1 to 3, wherein each tubular element (10) in the plurality of tubular elements (10):
- is isolated from the other tubular elements (10) in the plurality of tubular elements (10), and
- comprises a respective opening (12).

6. The connection device according to any one of the preceding claims, wherein the at least one opening (12) can be coupled to a source (16) which generates pressurised fluid and is configured to introduce fluid into the plurality of tubular elements (10).

7. The connection device according to claim 6, wherein the source (16) of pressurised fluid is coupled in use to the at least one opening (12) and is configured for adjusting a flow of fluid as a function of a pressure inside the plurality of tubular elements (10), so as to maintain a predetermined pressure inside said plurality of tubular elements (10).

8. The connection device according to claim 7, wherein at least one tubular element (10) in the plurality of tubular elements (10) comprises a plurality of micro-holes (18), positioned towards an inner portion of the tunnel structure of the connection device (1) and configured for transferring the fluid from said at least one tubular element (10) towards said inner portion of the tunnel structure of the connection device (1).

9. A system (1) for connecting and closing and thermal treatment of the space between two units (3) of an articulated vehicle (2), comprising:
- a connection and closing device according to claim 7,
- a thermal treatment plant configured for thermally treating the fluid, comprising air, inserted inside the plurality of tubular elements 10.

10. The system (1) for connection and closing and treating the air according to claim 9, wherein the thermal treatment plant (20) comprises a heat exchanger (22), configured to cool and/or heat the fluid comprising air inside the plurality of tubular elements (10).

11. An articulated vehicle (2), comprising:
- at least two units (3);
- a connecting joint and junction interposed between the units to allow the relative movement; and
- a connection device (1) according to any one of claims 1 to 8, configured to close the space between the two units (3) at said connecting joint.

12. The articulated vehicle (2) according to claim 11, comprising:
- a connection device (1) according to claim 8, and
- a thermal treatment plant (20) according to claim 9 or 10.

13. A method for operating a device for connecting and closing the space between two units (3) of an articulated vehicle (2), the process comprising:
- preparing a connection device (1) according to any one of claims 1 to 8,
- preparing a source (16) which generates pressurised fluid,
- inflating the plurality of tubular elements (10) of said connection device (1) by means of the at least one opening (12).

14. The method according to claim 13, comprising a step of adjusting a flow of fluid as a function of a pressure inside the plurality of tubular elements (10), so as to maintain a predetermined pressure inside said plurality of tubular elements (10).

15. The method according to claim 14, comprising the steps of:
- preparing a plurality of micro-holes (18) in at least one tubular element (10) in the plurality of tubular elements (10), positioned towards an inner portion (1f) of the tunnel structure of the connection device (1), and
- transferring the fluid from said at least one tubular element (10) towards said inner portion (1f) of the tunnel structure of the connection device (1) by means of said plurality of micro-holes (18).

16. The method according to claim 13, comprising the step of closing the tunnel structure of the connection device (1) in a watertight fashion.

## Patentansprüche

1. Verbindungsvorrichtung (1) zum Verbinden und Schließen des Raums zwischen zwei Einheiten (3) eines Gelenkfahrzeugs (2), umfassend:
- eine Vielzahl an aufblasbaren schlauchförmigen Elementen (10), die aus flexiblem Material bestehen, wobei die schlauchförmigen Elemente (10) in der Vielzahl an schlauchförmigen Elementen (10) nebeneinander angeordnet sind und eine Tunnelstruktur mit einer oberen Wand (1c) und zwei Seitenwänden (1d, 1e) bilden, wobei die Struktur zwei Enden (1a, 1b) aufweist, die mit jeweiligen Enden (3a, 3b) der zwei Einheiten (3) des Gelenkfahrzeugs (2) gekoppelt werden können,
- mindestens eine Öffnung (12) zum Einführen von Fluid in mindestens ein schlauchförmiges Element (10) in der Vielzahl an schlauchförmigen Elementen (10),
wobei die durch die Vielzahl an schlauchförmigen Elementen (10) gebildete Struktur im aufgeblasenen Zustand selbsttragend ist, wobei die Tunnelstruktur so ausgelegt ist, dass sie wasserdicht verschlossen wird, und ferner ein Ventil (17) umfasst, das zum Einführen und/oder Extrahieren von Fluid geöffnet werden kann, während es ansonsten geschlossen bleiben kann.

2. Verbindungsvorrichtung nach Anspruch 1, wobei mindestens ein schlauchförmiges Element (10) an einem der beiden Enden (1a, 1b) der durch die Vielzahl an schlauchförmigen Elementen (10) gebildeten Struktur die mindestens eine Öffnung (12) umfasst.

3. Verbindungsvorrichtung nach Anspruch 1 oder 2, wobei die schlauchförmigen Elemente (10) ausgelegt sind, um komprimierbar zu sein, vorzugsweise an einer oder beiden der zwei Seitenwände (1d, 1e).

4. Verbindungsvorrichtung nach einem der vorhergehenden Ansprüche, wobei an einem jeden Kontaktpunkt zwischen Paaren benachbarter schlauchförmiger Elemente (10) mindestens eine weitere Öffnung (14) vorhanden ist, um den Durchgang von Fluid zwischen den schlauchförmigen Elementen (10) im Paar zu ermöglichen.

5. Verbindungsvorrichtung nach einem der Ansprüche 1 bis 3, wobei ein jedes schlauchförmige Element (10) in der Vielzahl an schlauchförmigen Elementen (10):
- von den anderen schlauchförmigen Elementen (10) in der Vielzahl an schlauchförmigen Elementen (10) isoliert ist, und
- eine jeweilige Öffnung (12) umfasst.

6. Verbindungsvorrichtung nach einem der vorhergehenden Ansprüche, wobei die mindestens eine Öffnung (12) mit einer Quelle (16) verbunden werden kann, die unter Druck stehendes Fluid erzeugt und ausgelegt ist, um Fluid in die Vielzahl an schlauchförmigen Elementen (10) einzuführen.

7. Verbindungsvorrichtung nach Anspruch 6, wobei die Quelle (16) des unter Druck stehenden Fluids im Gebrauch mit der mindestens einen Öffnung (12) gekoppelt ist und ausgelegt ist, um einen Fluidstrom als Funktion eines Drucks innerhalb der Vielzahl an schlauchförmigen Elementen (10) einzustellen, um einen vorbestimmten Druck innerhalb der Vielzahl an schlauchförmigen Elementen (10) aufrechtzuerhalten.

8. Verbindungsvorrichtung nach Anspruch 7, wobei mindestens ein schlauchförmiges Element (10) in der Vielzahl an schlauchförmigen Elementen (10) eine Vielzahl von Mikrolöchern (18) umfasst, die in Richtung eines inneren Abschnitts der Tunnelstruktur der Verbindungsvorrichtung (1) positioniert und zum Übertragen des Fluids von dem mindestens einen schlauchförmigen Element (10) in Richtung des inneren Abschnitts der Tunnelstruktur der Verbindungsvorrichtung (1) ausgelegt sind.

9. System (1) zum Verbinden und Schließen und Wärmebehandeln des Raums zwischen zwei Einheiten (3) eines Gelenkfahrzeugs (2), umfassend:
- eine Verbindungs- und Schließvorrichtung nach Anspruch 7,
- eine Wärmebehandlungsanlage, die zum Wärmebehandeln des Fluids ausgelegt ist, das Luft umfasst, das in die Vielzahl an schlauchförmigen Elementen 10 eingesetzt ist.

10. System (1) zum Verbinden und Schließen und Behandeln der Luft nach Anspruch 9, wobei die Wärmebehandlungsanlage (20) einen Wärmetauscher (22) umfasst, der ausgelegt ist, um das Fluid, das Luft innerhalb der Vielzahl an schlauchförmigen Elementen (10) umfasst, zu kühlen und/oder zu erwärmen.

11. Gelenkfahrzeug (2), umfassend:
- mindestens zwei Einheiten (3);
- ein Verbindungsgelenk und einen Anschluss, der zwischen den Einheiten angeordnet ist, um die relative Bewegung zu ermöglichen; und
- eine Verbindungsvorrichtung (1) nach einem der Ansprüche 1 bis 8, die so ausgelegt ist, dass sie den Raum zwischen den beiden Einheiten (3) am Verbindungsgelenk schließt.

12. Gelenkfahrzeug (2) nach Anspruch 11, umfassend:
- eine Verbindungsvorrichtung (1) nach Anspruch 8, und
- eine Wärmebehandlungsanlage (20) nach Anspruch 9 oder 10.

13. Verfahren zum Betreiben einer Vorrichtung zum Verbinden und Schließen des Raums zwischen zwei Einheiten (3) eines Gelenkfahrzeugs (2), wobei das Verfahren umfasst:
- Vorbereiten einer Verbindungsvorrichtung (1) nach einem der Ansprüche 1 bis 8,
- Vorbereiten einer Quelle (16), die unter Druck stehendes Fluid erzeugt,
- Aufblasen der Vielzahl an schlauchförmigen Elementen (10) der Verbindungsvorrichtung (1) mittels der mindestens einen Öffnung (12).

14. Verfahren nach Anspruch 13, umfassend einen Schritt zum Einstellen eines Fluidstroms als Funktion eines Drucks innerhalb der Vielzahl an schlauchförmigen Elementen (10), um einen vorbestimmten Druck innerhalb der Vielzahl an schlauchförmigen Elementen (10) aufrechtzuerhalten.

15. Verfahren nach Anspruch 14, umfassend die weiteren Schritte:
- Vorbereiten einer Vielzahl an Mikrolöchern (18) in mindestens einem schlauchförmigen Element (10) in der Vielzahl an schlauchförmigen Elementen (10), die in Richtung eines inneren Abschnitts (1f) der Tunnelstruktur der Verbindungsvorrichtung (1) positioniert sind, und
- Übertragen des Fluids von dem mindestens einen schlauchförmigen Element (10) in Richtung des inneren Abschnitts (1f) der Tunnelstruktur der Verbindungsvorrichtung (1) mittels der Vielzahl an Mikrolöchern (18).

16. Verfahren nach Anspruch 13, umfassend den Schritt zum wasserdichten Verschließen der Tunnelstruktur der Verbindungsvorrichtung (1).

## Revendications

1. Dispositif de raccordement (1) servant à raccorder et fermer l'espace entre deux unités (3) d'un véhicule articulé (2), comprenant :
- une pluralité d'éléments tubulaires gonflables (10) étant constitués d'un matériau flexible, les éléments tubulaires (10) dans la pluralité d'éléments tubulaires (10) étant positionnés les uns à côté des autres et formant une structure de tunnel comportant une paroi supérieure (1c) et deux parois latérales (1d, 1e), la structure comportant deux extrémités (1a, 1b) qui peuvent être accouplées à des extrémités respectives (3a, 3b) desdites deux unités (3) du véhicule articulé (2),
- au moins une ouverture (12) servant à introduire du fluide à l'intérieur d'au moins un élément tubulaire (10) dans la pluralité d'éléments tubulaires (10),
dans lequel la structure formée par la pluralité d'éléments tubulaires (10), lorsqu'elle est gonflée, est autoportante, dans lequel la structure de tunnel est configurée pour être fermée de manière étanche à l'eau et comprenant de plus une vanne (17) pouvant être ouverte pour introduire et/ou extraire du fluide, alors qu'elle peut rester fermée dans le cas contraire.

2. Dispositif de raccordement selon la revendication 1, dans lequel au moins un élément tubulaire (10) à l'une desdites deux extrémités (1a, 1b) de la structure formée par la pluralité d'éléments tubulaires (10) comprend l'au moins une ouverture (12).

3. Dispositif de raccordement selon la revendication 1 ou 2, dans lequel les éléments tubulaires (10) sont configurés pour être comprimés, de préférence en correspondance de l'une ou des deux parois latérales (1d, 1e).

4. Dispositif de raccordement selon l'une quelconque des revendications précédentes, dans lequel, à chaque point de contact entre des paires d'éléments tubulaires adjacents (10), il se trouve au moins une ouverture supplémentaire (14) permettant le passage de fluide entre les éléments tubulaires (10) dans la paire.

5. Dispositif de raccordement selon l'une quelconque des revendications 1 à 3, dans lequel chaque élément tubulaire (10) dans la pluralité d'éléments tubulaires (10) :
- est isolé des autres éléments tubulaires (10) dans la pluralité d'éléments tubulaires (10), et
- comprend une ouverture respective (12).

6. Dispositif de raccordement selon l'une quelconque des revendications précédentes, dans lequel l'au moins une ouverture (12) peut être accouplée à une source (16) générant du fluide sous pression et étant configurée pour introduire du fluide dans la pluralité d'éléments tubulaires (10).

7. Dispositif de raccordement selon la revendication 6, dans lequel la source (16) de fluide sous pression est accouplée en fonctionnement à l'au moins une ouverture (12) et est configurée pour régler un débit de fluide en fonction d'une pression à l'intérieur de la pluralité d'éléments tubulaires (10), de manière à maintenir une pression prédéterminée à l'intérieur de ladite pluralité d'éléments tubulaires (10).

8. Dispositif de raccordement selon la revendication 7, dans lequel au moins un élément tubulaire (10) dans la pluralité d'éléments tubulaires (10) comprend une pluralité de micro-trous (18) positionnés vers une partie intérieure de la structure de tunnel du dispositif de raccordement (1) et configurés pour transférer le fluide dudit au moins un élément tubulaire (10) vers ladite partie intérieure de la structure de tunnel du dispositif de raccordement (1).

9. Système (1) de raccordement, de fermeture et de traitement thermique de l'espace entre deux unités (3) d'un véhicule articulé (2), comprenant :
- un dispositif de raccordement et de fermeture selon la revendication 7,
- une installation de traitement thermique configurée pour traiter thermiquement le fluide, comprenant de l'air, introduit à l'intérieur de la pluralité d'éléments tubulaires 10.

10. Système (1) de raccordement et de fermeture et de traitement de l'air selon la revendication 9, dans lequel l'installation de traitement thermique (20) comprend un échangeur de chaleur (22) configuré pour refroidir et/ou chauffer le fluide comprenant de l'air à l'intérieur de la pluralité d'éléments tubulaires (10).

11. Véhicule articulé (2), comprenant :
- au moins deux unités (3) ;
- un joint de raccordement et une jonction interposée entre les unités pour permettre le mouvement correspondant ; et
- un dispositif de raccordement (1) selon l'une quelconque des revendications 1 à 8, configuré pour fermer l'espace entre les deux unités (3) en correspondance dudit joint de raccordement.

12. Véhicule articulé (2) selon la revendication 11, comprenant :
- un dispositif de raccordement (1) selon la revendication 8, et
- une installation de traitement thermique (20) selon la revendication 9 ou 10.

13. Procédé d'exploitation d'un dispositif de raccordement et de fermeture de l'espace entre deux unités (3) d'un véhicule articulé (2), le procédé comprenant :
- préparer un dispositif de raccordement (1) selon l'une quelconque des revendications 1 à 8,
- préparer une source (16) générant un fluide sous pression,
- gonfler la pluralité d'éléments tubulaires (10) dudit dispositif de raccordement (1) au moyen de l'au moins une ouverture (12).

14. Procédé selon la revendication 13, comprenant une étape de réglage d'un débit de fluide en fonction d'une pression à l'intérieur de la pluralité d'éléments tubulaires (10), de manière à maintenir une pression prédéterminée à l'intérieur de ladite pluralité d'éléments tubulaires (10).

15. Procédé selon la revendication 14, comprenant les étapes de :
- préparer une pluralité de micro-trous (18) dans au moins un élément tubulaire (10) dans la pluralité d'éléments tubulaires (10), positionnés vers une partie intérieure (1f) de la structure de tunnel du dispositif de raccordement (1), et
- transférer le fluide à partir dudit au moins un élément tubulaire (10) vers ladite partie intérieure (1f) de la structure de tunnel du dispositif de raccordement (1) au moyen de ladite pluralité de micro-trous (18).

16. Procédé selon la revendication 13, comprenant l'étape consistant à fermer la structure de tunnel du dispositif de raccordement (1) de manière étanche à l'eau.
